# EUROPÄISCHE PATENTANMELDUNG

(11) **EP 3 854 555 A1**
(43) Veröffentlichungstag der Anmeldung: **28.07.2021**
(21) Anmeldenummer: 21153304.7
(22) Anmeldetag: 25.01.2021
(51) Int. Cl.: B28C 5/42, B60P 3/16

(54) **FAHRMISCHER UND NACHRÜSTKIT**

(30) Priorität: 24.01.2020 EP 20153652; 05.08.2020 DE 102020120701
(71) Anmelder: Remmel Consulting GmbH, 50996 Köln (DE)
(72) Erfinder: Döring, Bernd, 50996 Köln (DE); Remmel, Thorsten, 50996 Köln (DE)
(74) Vertreter: LKGLOBAL Lorenz & Kopf PartG mbB Patentanwälte

(57) **Zusammenfassung**

Beschrieben wird ein Fahrmischer, mit einer Mischertrommel (10), die auf einem Rahmen (8) eines Mischerfahrzeugs (2) um eine Drehachse (x) drehbar angeordnet ist, wobei die Mischertrommel (10) eine Trommelöffnung (32) aufweist, über die die Mischertrommel (10) befüllbar und entleerbar ist, wobei an dem die Mischertrommel (10) tragenden Rahmen (8) wenigstens ein Lagerbock (16) mit wenigstens zwei Haltearmen (18, 36) angeordnet sind, wobei die wenigstens zwei Haltearme (18, 36) beiderseits der Trommelöffnung (32) angeordnet sind, wobei an den Haltearmen (18, 36) ein Einfülltrichter (24) angeordnet ist, wobei der Einfülltrichter (24) in einer ersten Position so ausgerichtet ist, dass mittels des Einfülltrichters (24) Material über die Trommelöffnung (32) in die Mischertrommel (10) füllbar ist, wobei der Einfülltrichter (24) zumindest an einem ersten Haltearm (36) mittels einer Lagervorrichtung (38) bewegbar gelagert angeordnet ist, wobei eine Drehachse (d) oder eine Bewegungsachse der Lagervorrichtung (38) überwiegend vertikal ausgerichtet ist, sodass der Einfülltrichter (24) seitlich oder nach oben von der Trommelöffnung (32) wegbewegbar ist, wobei der Einfülltrichter (24) zumindest an einem zweiten Haltearm (18) über eine lösbare Befestigung (40) festgelegt ist.

## Beschreibung

### PRIORITÄT EINER FRÜHEREN ANMELDUNG

Diese Anmeldung beansprucht die Priorität der Europäischen Patentanmeldung Nr. 20153652.1, eingereicht am 24. Januar 2020, die hiermit in ihrer Gesamtheit durch die Bezugnahme aufgenommen wird.

Diese Anmeldung beansprucht außerdem die Priorität der Deutschen Patentanmeldung Az. 102020 120 701.8, eingereicht am 05. August 2020, die hiermit in ihrer Gesamtheit durch die Bezugnahme aufgenommen wird.

### TECHNISCHES GEBIET

Die Erfindung betrifft einen Fahrmischer und ein Nachrüstkit zur Montage an einem Fahrmischer.

### HINTERGRUND DER ERFINDUNG

Fahrmischer für Beton weisen im Allgemeinen eine Mischertrommel auf, die drehbar auf dem Rahmen eines LKW angeordnet ist und eine rückseitige Trommelöffnung aufweist, an der sowohl eine Auslaufschale für den Austrag von Beton als auch ein Einfülltrichter für das Einfüllen von Beton angeordnet ist. Mit derartigen Fahrmischern wird Beton laufend von Betonanlagen zu Baustellen transportiert, wo der Beton dann entsprechend verwendet wird. Der Beton wird dazu beim Betonhersteller über den Einfülltrichter in die Mischertrommel eingefüllt und an der Baustelle über die Auslaufschale und einer meist schwenkbaren Auslaufschurre aus der Mischertrommel ausgebracht. Die Mischertrommel weist im Inneren eine oder mehrere Mischerspiralen auf, die während der Fahrt und Wartezeiten den Beton in Bewegung hält. Die Mischerspirale ist so gestaltet, dass der Beton bei einer Drehrichtung in der Mischertrommel gehalten wird und eine Umkehrung der Drehrichtung der Mischertrommel zu einem Transport des Betons zur Trommelöffnung hin führt.

Bei diesen Fahrmischern verfestigt sich der Beton über die Zeit und setzt sich in der Innenwand der Mischertrommel fest. Hierbei kann sich der Beton abhängig von den Einsatzzeiten des Fahrmischers mehr und mehr auftragen, sodass nach einigen Wochen oder Monaten der angebackene Beton von der Innenwand der Trommel beseitigt werden muss. Dies kann manuell erfolgen, indem ein Bediener in das Innere der Mischertrommel steigt und dort mit einem Presslufthammer den Beton löst, sodass die Betonbrocken dann nach Verlassen der Trommel durch den Bediener über die am rückseitigen Ende der Mischertrommel vorgesehene Befüll- und Entleeröffnung der Trommel und die daran anschließende Auslaufschale durch Drehen der Mischertrommel ausgetragen werden können. Hierbei erfolgt der Einstieg des Bedieners in die Trommel über ein im vorderen oder mittleren Teil der Mischertrommel vorgesehenes Mannloch, wobei nach erfolgter Reinigung der Bediener über dieses Mannloch die Mischertrommel wieder verlässt und das Mannloch schließt. Eine derartige Reinigung mittels Presslufthammer einschließlich Einstieg des Bedieners über das Mannloch ist aufwendig. Ferner kann die Auflösung des verfestigten Betons durch Presslufthammer und dergleichen auch zu Schädigungen an der Mischertrommel führen. Der Einstieg in die und das Verlassen der Mischertrommel sowie die Bearbeitung des ausgehärteten Betons in der Mischertrommel stellt ein erhebliches Gefährdungspotenzial für den Bediener dar.

Nach neueren moderneren Verfahren erfolgt die risikobehaftete sowie zeit- und arbeitsaufwendige Beseitigung des angebackenen Betons nicht mehr manuell über Presslufthämmer und dergleichen, vielmehr über eine Wasserlanze, die auf einem hebebühneartigen Aufbau montiert ist. Das Reinigungsfahrzeug fährt mit seinem rückwärtigen Ende von hinten an den Fahrmischer bzw. an die Mischertrommel heran, sodass die Lanze in geeigneter Weise in die Befüll- und Entleeröffnung eingefahren werden und dann über die Lanze Wasser unter Druck geeignet in das Innere der Mischertrommel eingespritzt werden kann.

Eine bekannte Möglichkeit ist, hierzu den rückseitig an der Mischertrommel an der Befüll- und Entleeröffnung angeordneten Einfülltrichter zu demontieren, um die Befüll- und Entleeröffnung der Mischertrommel, im Folgenden stets kurz mit Trommelöffnung bezeichnet, freizugeben, der dann mittels eines Krans nach oben angehoben wird. Nach Beendigung des Reinigungsvorganges ist der demontierte Einfülltrichter wieder entsprechend zu montieren. Auch dies ist allerdings mit einem erheblichen Arbeits- und Zeitaufwand verbunden.

Aus der DE 20 2012 009 634 U1 ist ein Fahrmischer für Beton bekannt, mit einer Mischertrommel, die auf den Rahmen des Fahrmischers angeordnet ist und an deren für die Betonbefüllung und -entleerung dienende Trommelöffnung eine Auslaufschale für den Austrag von Beton angesetzt ist, oberhalb der ein Einfülltrichter für das Einfüllen von Beton über die Trommelöffnung in die Mischertrommel angeordnet ist, der an der Trommelöffnung für die Betoneinfüllung und -entleerung angesetzt ist, diese im Wesentlichen überdeckt und mit der Auslaufschale über Schnellbefestigungsmittel befestigt ist, insbesondere über eine Querstange und Schraubverbindungen, wobei der Einfülltrichter derart verschwenkbar aufgehängt ist, dass dieser zur Freigabe der Trommelöffnung von dieser nach oben wegschwenkbar ist.

Nachteilig an der dort gezeigten Lösung ist, dass der Einfülltrichter zum Verschwenken eine hydraulische Hebevorrichtung braucht, sodass die dort gezeigte Lösung aufwendig und teuer ist.

### ZUSAMMENFASSUNG DER ERFINDUNG

Somit stellt sich die Aufgabe, Fahrmischer sowie Nachrüstkits der eingangs genannten Art dahingehend weiterzubilden, dass diese einen kostengünstigeren und einfacheren Zugang zur Trommelöffnung ermöglichen.

Die Aufgabe wird durch den Gegenstand der unabhängigen Ansprüche erreicht. Weiterführende Ausgestaltungen und Weiterbildungen sind Gegenstand der abhängigen Ansprüche.

Beschrieben wird ein Fahrmischer, mit einer Mischertrommel, die auf einem Rahmen eines Mischerfahrzeugs um eine Drehachse drehbar angeordnet ist, wobei die Mischertrommel eine Trommelöffnung aufweist, über die die Mischertrommel befüllbar und entleerbar ist, wobei an dem die Mischertrommel tragenden Rahmen wenigstens ein Lagerbock mit wenigstens zwei Haltearmen angeordnet sind, wobei die wenigstens zwei Haltearme beiderseits der Trommelöffnung angeordnet sind, wobei an den Haltearmen ein Einfülltrichter angeordnet ist, wobei der Einfülltrichter in einer ersten Position so ausgerichtet ist, dass mittels des Einfülltrichters Material über die Trommelöffnung in die Mischertrommel füllbar ist, wobei der Einfülltrichter zumindest an einem ersten Haltearm mittels einer Lagervorrichtung bewegbar gelagert angeordnet ist, wobei eine Drehachse oder eine Bewegungsachse der Lagervorrichtung überwiegend vertikal ausgerichtet ist, sodass der Einfülltrichter seitlich oder nach oben von der Trommelöffnung wegbewegbar ist, wobei der Einfülltrichter zumindest an einem zweiten Haltearm über eine lösbare Befestigung festgelegt ist.

Je nach Ausgestaltung können die wenigstens zwei Haltearme an einem zentralen Lagerbock angeordnet sein oder es kann pro Haltearm ein eigener Lagerbock am Rahmen vorgesehen sein.

Die Lagervorrichtung kann ein Scharnier oder eine Linearführung sein.

Der Einfülltrichter weist ein Trichterblech auf, das in der ersten Position in die Trommelöffnung hineinragt, sodass Material von einem Ende des Trichterblechs in die Mischertrommel fällt oder fließt.

Dadurch, dass der Einfülltrichter seitlich oder nach oben, d.h. zumindest zu einem Großteil vertikal, wegbewegbar ist, kann die Trommelöffnung leicht erreicht werden.

Ist der Einfülltrichter wegschwenkbar, ist es möglich, diesen ohne einen Antrieb zu verschwenken, da nur eine sehr geringe Änderung der potenziellen Energie des Einfülltrichter beim Verschwenken erfolgt. Der Einfülltrichter kann von einem Bediener mit reiner Muskelkraft verschwenkt werden. Dazu muss der Bediener zunächst die lösbare Befestigung lösen und kann den Einfülltrichter anschließend seitlich wegschwenken, zum Beispiel unter Zuhilfenahme einer Hakenstange.

Die Haltearme können auch oberhalb oder unterhalb der Trommelöffnung enden, solange sie seitlich davon angeordnet sind, also in Fahrtrichtung betrachtet links und rechts der Trommelöffnung. Hierdurch wird erreicht, dass der Einfülltrichter in der ersten Position beiderseits der Trommelöffnung abgestützt ist. Hierdurch können auf den Einfülltrichter wirkende Kräfte, insbesondere seine eigene Gewichtskraft und die Gewichtskraft des über den Einfülltrichter eingeführten Materials, beispielsweise Betons, über die Haltearme abgeleitet werden.

In einer vorteilhaften Ausführungsform ist der Einfülltrichter an dem ersten Haltearm mittels der Lagervorrichtung drehbar gelagert, sodass der Einfülltrichter seitlich von der Trommelöffnung wegschwenkbar ist, wobei der Einfülltrichter an dem zweiten Haltearm über die lösbare Befestigung festgelegt ist. Die Lagervorrichtung kann dabei, wie vorangehend erwähnt, ein Wälzlager aufweisen. Der Einfülltrichter lässt sich damit um die vorbestimmte Achse seitlich verschwenken. Beim Verschwenken wird der Einfülltrichter um eine seitlich der Trommelöffnung liegende Achse gedreht, sodass er von der Trommelöffnung nach hinten gezogen wird und in einem durch den Aufbau bestimmten Abstand um die Achse rotiert.

In einer alternativen Ausführungsform ist der Einfülltrichter an dem ersten Haltearm und dem zweiten Haltearm jeweils nach oben bewegbar gelagert, sodass der Einfülltrichter nach oben von der Trommelöffnung wegbewegbar ist, wobei der Einfülltrichter an dem ersten Haltearm und dem zweiten Haltearm über die lösbare Befestigung festgelegt ist.

Die nach oben gerichtete, d.h. zu einem großen Teil vertikale, Bewegung kann insbesondere nach oben erfolgen, sodass der Einfülltrichter anschließend weiter oberhalb der Trommelöffnung angeordnet ist. Es ist vorstellbar, den Einfülltrichter für die nach oben gerichtete Bewegung beidseitig mit einer Linearführung auszustatten.

Die nach oben gerichtete Bewegung des Einfülltrichters ist aufgrund des Gewichts kaum mit Muskelkraft zu bewältigen. Es ist vorstellbar, hierfür eine Antriebsvorrichtung vorzusehen, die den Einfülltrichter bewegt. Dies kann insbesondere ein Linearantrieb sein. Hierzu kommen verschiedene Varianten in Betracht.

Beispielsweise könnte ein Spindelgetriebe mit einer Spindel und einem mit dem Außengewinde der Spindel in Eingriff bringbaren drehfesten Element vorgesehen sein. Das Spindelgetriebe ist von einem Bediener durch eine Kurbel oder durch einen Motor betätigbar. Dabei ist darauf zu achten, dass das Spindelgetriebe bevorzugt selbsthemmend ist und ein Rückdrehen aufgrund des Gewichts des Einfülltrichters ausgeschlossen wird. Das Spindelgetriebe könnte zudem über einen Elektromotor betrieben werden, beispielsweise ausgelöst durch einen Knopfdruck eines Bedieners an einer Steuervorrichtung oder im Fahrerhaus des Fahrmischers.

Alternativ dazu kommt ein hydraulischer Aktuator in Form eines Stellzylinders oder Teleskopzylinders in Betracht. Dieser könnte mit einem bereits vorhandenen Hydrauliksystem des Fahrzeugs gekoppelt sein und durch eine entsprechende Ventilstellung den Einfülltrichter bewegen. Bei der Integration der Antriebsvorrichtung könnte es vorteilhaft sein, den Antrieb entweder vollständig mittig an dem ein Fülltrichter zu platzieren, um ein Verkanten zu vermeiden. Andererseits wäre denkbar, beidseitig des Einfülltrichters jeweils einen einzelnen Antrieb vorzusehen, wobei die beiden Antriebe zum Synchronlauf miteinander gekoppelt sind.

In einer weiteren Ausführungsform kann vorgesehen sein, dass die lösbare Befestigung ein am Einfülltrichter angeordnetes Klemmelement und ein am zweiten Haltearm angeordnetes Gegenklemmelement aufweist.

Durch Verwendung eines Klemmelements und eines Gegenklemmelements ist es möglich, eine schnelle Befestigung und ein schnelles Lösen des Einfülltrichters in der ersten Position zu erreichen. Des Weiteren kann so vermieden werden, dass Befestigungskomponenten verloren gehen, was zur Folge hätte, dass eine Weiterfahrt ohne Ersatzteil nicht möglich wäre. Je nachdem, wie fest die Klemmkraft ist, die zwischen den Klemmelement und Gegenklemmelement vorherrscht, kann es erforderlich sein, einen Hammer zu verwenden, um die Klemmung durch Hammerschlag aufzulösen.

In einer vorteilhaften Ausführungsform kann als Option vorgesehen sein, dass das Klemmelement eine Öse und das Gegenklemmelement einen Klemmkonus darstellt.

Öse und Klemmkonus sind einerseits selbstzentrierend, andererseits toleranz- und verschmutzungsunempfindlich. Hierdurch kann unter sämtlichen Bedingungen ein sicheres Befestigen des Einfülltrichters an dem zweiten Haltearm erfolgen, auch, wenn die Komponenten im laufenden Betrieb verbogen wurden.

In einem Beispiel kann vorgesehen sein, dass der Einfülltrichter am ersten Haltearm über ein Wälzlager gelagert ist.

Durch Verwendung eines Wälzlagers kann die Reibung zwischen dem Lager und dem Gegenlager reduziert werden, sodass ein einfacheres Verschwenken möglich ist.

In einer weiteren vorteilhaften Ausführungsform kann vorgesehen sein, dass die Haltearme mittels eines die Trommelöffnung überspannenden Bügels miteinander verbunden sind, wobei an dem Bügel eine lösbare Befestigung vorgesehen ist, an der der Einfülltrichter in der ersten Position festlegbar ist.

Ein entsprechender Bügel wird manchmal auch als Rohrbügel oder Wasserbügel bezeichnet.

Ein solcher Bügel kann unter anderem dazu dienen, die Mischertrommel am rückseitigen Ende zu sichern. Durch Vorsehen einer derartigen weiteren lösbaren Befestigung kann der Einfülltrichter in der ersten Stellung gesichert werden. Eine entsprechende Befestigung kann gemäß einer weiterführenden Ausgestaltung als Splintsicherung ausgestaltet sein, die werkzeugfrei geöffnet und geschlossen werden kann. Ein entsprechender Splint kann mithilfe eines Bandes oder einer Kette gegen Verlieren gesichert sein.

In einer weiteren vorteilhaften Ausführungsform kann vorgesehen sein, dass der Einfülltrichter in eine zweite Position schwenkbar ist, in der die Trommelöffnung axial frei zugänglich ist.

Wenn die Trommelöffnung axial frei zugänglich ist, ist es möglich, eine Reinigungslanze in die Trommelöffnung einzuführen, die dann den Innenraum der Mischertrommel reinigt und von anhaftenden Materialien, z.B. Betonresten, befreit.

In einer weiteren vorteilhaften Ausführungsform kann vorgesehen sein, dass an den Haltearmen eine Auslaufschale angeordnet ist.

Wenn die Auslaufschale an dem Haltearm angeordnet ist, ist es möglich, die Auslaufschale unabhängig vom Einfülltrichter zu montieren und zu demontieren. Des Weiteren wird die Toleranzsituation verbessert, wenn die Auslaufschale und der Einfülltrichter nicht aneinander befestigt werden müssen.

In einer weiteren vorteilhaften Ausführungsform kann vorgesehen sein, dass der Einfülltrichter an einer Querstange festgelegt ist, wobei die Querstange drehbar am ersten Haltearm festgelegt ist.

Mithilfe der Querstange kann der Einfülltrichter kompakter und leichter gebaut werden. Des Weiteren ist es möglich, die Querstange gegebenenfalls bei Beschädigung separat zum Einfülltrichter zu ersetzen.

In einer weiteren vorteilhaften Ausführungsform kann vorgesehen sein, dass die Drehachse relativ zur Vertikalen derart verkippt ist, dass der Einfülltrichter beim Verschwenken von der ersten Position aus angehoben wird.

Hierdurch ist es möglich, die Rotationsachse des Einfülltrichters beim Verschwenken leicht zu verkippen, sodass der Einfülltrichter zunächst leicht angehoben wird, wodurch ein unteres Ende, das in die Trommelöffnung hineinragt, kollisionsfrei aus der Trommelöffnung hinausbewegt werden kann. Die notwendige Verkippung der Drehachse zur Vertikalen ist dabei gering. Eine Verkippung von unter 10°, zum Beispiel 3 - 6° nach außen und 5 - 10° nach vorne reichen aus, um ein ausreichendes Anheben des Einfülltrichters zu bewirken.

Es ist weiterhin vorteilhaft, wenn der Fahrmischer ferner mindestens eine Antriebsvorrichtung zum Bewegen des Einfülltrichters aufweist. Insbesondere bei der Realisierung einer vertikalen Bewegbarkeit ist ein Bediener durch die Antriebsvorrichtung zu unterstützen.

Die Erfindung betrifft ferner ein Nachrüstkit zum Umbau eines Fahrmischers zu einem Fahrmischer der zuvor beschriebenen Art, mit einer Querstange mit
- einer Befestigung zur Montage eines Einfülltrichters,
- einer Lagervorrichtung zur Festlegung der Querstange an dem ersten Haltearm sowie
- einem lösbaren Befestigungsmittel zur Festlegung an dem zweiten Haltearm,
- sowie einem Gegenbefestigungsmittel zur Montage an dem zweiten Haltearm.

Ein entsprechendes Nachrüstkit erlaubt es, herkömmliche Fahrmischer so umzurüsten, dass der Einfülltrichter komplett wegschwenkbar ist, um einen freien Zugang zu der Trommelöffnung zu bekommen. Hierdurch kann die Mischertrommel von innen mithilfe einer Lanze gereinigt werden.

Befestigungsmittel und Gegenbefestigungsmittel können ein Klemmelement und ein Gegenklemmelement sein, insbesondere eine Öse und ein Klemmkonus. Das Scharnier kann ein Wälzlager umfassen.

In einem Beispiel ist ein Nachrüstkit zum Umbau eines Fahrmischers zu einem Fahrmischer der zuvor beschriebenen Art vorgesehen, bei dem ein Einfülltrichter an dem Mischertrommel-Aufbau des Fahrmischers mit einem Beschlag befestigbar ist. Der Einfülltrichter ist dabei derart mit dem Beschlag verbunden, dass der Einfülltrichter in montiertem Zustand an dem Mischertrommel-Aufbau bewegbar gehalten ist, um den Einfülltrichter von der Trommelöffnung der Mischertrommel temporär wegbewegen zu können. Der Beschlag stellt dabei die Montage des Einfülltrichters an dem Mischertrommel-Aufbau zur Verfügung und gewährleistet auch die Bewegbarkeit des Einfülltrichters, sowie auch dessen sichere Festlegung an dem Mischertrommel-Aufbau.

In einem Beispiel ist ein Nachrüstkit zum Umbau eines Fahrmischers mit einem beweglich gehaltenen Einfülltrichter vorgesehen, um die Mischertrommel besser reinigen zu können. Der Nachrüstkit weist eine Querstange mit einer Befestigung zur Montage eines Einfülltrichters, eine Lagervorrichtung zur Festlegung der Querstange zumindest an dem ersten Haltearm, ein lösbares Befestigungsmittel zur Festlegung zumindest an dem zweiten Haltearm, sowie ein Gegenbefestigungsmittel zur Montage an dem zweiten Haltearm auf.

In einem Beispiel ist ein Fahrmischer vorgesehen, mit einer Mischertrommel, die auf einem Rahmen eines Mischerfahrzeugs um eine Drehachse drehbar angeordnet ist, wobei die Mischertrommel eine Trommelöffnung aufweist, über die die Mischertrommel befüllbar und entleerbar ist, wobei an dem die Mischertrommel tragenden Rahmen wenigstens ein Lagerbock mit wenigstens zwei Haltearmen angeordnet sind, wobei die wenigstens zwei Haltearme beiderseits der Trommelöffnung angeordnet sind, wobei an den Haltearmen ein Einfülltrichter angeordnet ist, wobei der Einfülltrichter in einer ersten Position so ausgerichtet ist, dass mittels des Einfülltrichters Material über die Trommelöffnung in die Mischertrommel füllbar ist, wobei der Einfülltrichter an einem ersten Haltearm mittels einer Lagervorrichtung drehbar gelagert angeordnet ist, wobei eine Drehachse der Lagervorrichtung überwiegend vertikal ausgerichtet ist, sodass der Einfülltrichter seitlich von der Trommelöffnung wegschwenkbar ist, wobei der Einfülltrichter an einem zweiten Haltearm über eine lösbare Befestigung festgelegt ist.

In einer weiterführenden Ausgestaltung kann das Nachrüstkit eine Auswahl aus folgenden Komponenten enthalten:
- eine Lagerbrücke zum Festlegen der Lagervorrichtung,
- eine Lagerbrücke zur Befestigung des Gegenbefestigungsmittels an dem Haltearm, ein Befestigungsmittel zur Festlegung an einem Bügel, der die beiden Haltearme miteinander verbindet,
- ein Bügel bzw. ein Wasserrohr, mit dem erster Haltearm und ein zweiter Haltearm miteinander verbindbar sind,
- ein Befestigungsmittel zum Festlegen des Einfülltrichters, und/oder
- einen Betätigungshaken.

Das Nachrüstkit kann ferner als Option den Einfülltrichter aufweisen. Ein Einfülltrichter unterliegt bei regelmäßigem Gebrauch Verschleißerscheinungen und wird bei Bedarf ausgetauscht. Es bietet sich an, ein Nachrüstkit bereitzustellen, so dass bei der Notwendigkeit des Austauschs des Einfülltrichters gleichzeitig die vorangehend dargestellten, vorteilhaften Merkmale realisiert werden können.

Das Nachrüstkit kann weiterhin mindestens einen Beschlag zum Befestigen der Lagervorrichtung zumindest an dem ersten Haltearm aufweisen, wobei der Beschlag zumindest mit dem ersten Haltearm starr verbindbar ist. Beispielsweise kann der Beschlag zum Befestigen geschraubt oder geschweißt werden.

In einem Beispiel eignet sich der Nachrüstkit dafür, einen vorhandenen Fahrmischer mit einem beweglichen Einfülltrichter auszustatten. Der bewegliche Einfülltrichter kann dabei zum Beispiel durch einen bestehenden Einfülltrichter zur Verfügung gestellt werden, der sonst fest montiert würde; die Beweglichkeit wird durch den Bewegungsmechanismus des Nachrüstkits zur Verfügung gestellt. Der bewegliche Einfülltrichter kann auch durch einen Einfülltrichter gebildet werden, der Bestandteil des Nachrüstkits ist.

In einem anderen Beispiel eignet sich der Nachrüstkit dafür, einen vorhandenen fest montierten Einfülltrichter eines Fahrmischers durch einem beweglichen Einfülltrichter zu ersetzen. Der bewegliche Einfülltrichter ist beispielsweise Bestandteil des Nachrüstkits. Ein weiteres Beispiel sieht vor, einen bestehenden, d.h. vorhandenen, fest montierten Einfülltrichter eines Fahrmischers zu demontieren und mit dem Nachrüstkit wieder zu befestigen, um so einen beweglichen Einfülltrichter zur Verfügung stellen zu können.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
Fig. 1 zeigt eine Seitenansicht eines Fahrmischers.
Fig. 2 zeigt eine Heckansicht des Fahrmischers aus Fig. 1.
Fig. 3a, b zeigt eine Heckansicht des Fahrmischers aus Fig. 1 mit einem Einfülltrichter in einer ersten Position.
Fig. 4a, b zeigt eine Heckansicht des Fahrmischers aus Fig. 1 mit dem Einfülltrichter in einer zweiten Position.
Fig. 5 zeigt eine Heckansicht des Fahrmischers aus Fig. 1 mit dem Einfülltrichter.
Fig. 6 zeigt ein Detail einer Befestigung des Einfülltrichters in der ersten Position.
Fig. 7 zeigt schematisch einen vertikal bewegbaren Einfülltrichter an einem Fahrmischer.
Fig. 8-10 zeigen schematisch Komponenten eines Nachrüstkits.
Fig. 11 zeigt eine perspektivische Draufsicht auf einen Bereich eines Fahrmischers mit einem (noch nicht montierten) Einfülltrichter.
Fig. 12 zeigt den Fahrmischer aus Fig. 11, bei dem der Einfülltrichter montiert ist.
Fig. 13 zeigt eine Seitenansicht des Fahrmischers aus Fig. 11.
Fig. 14 zeigt eine Seitenansicht des Fahrmischers aus Fig. 12.
Fig. 15 zeigt in einer seitlichen Ansicht eine Reinigungsvorrichtung für Fahrmischer in einem schematischen Aufbau.

### DETAILLIERTE DARSTELLUNG EXEMPLARISCHER

### AUSFÜHRUNGSFORMEN

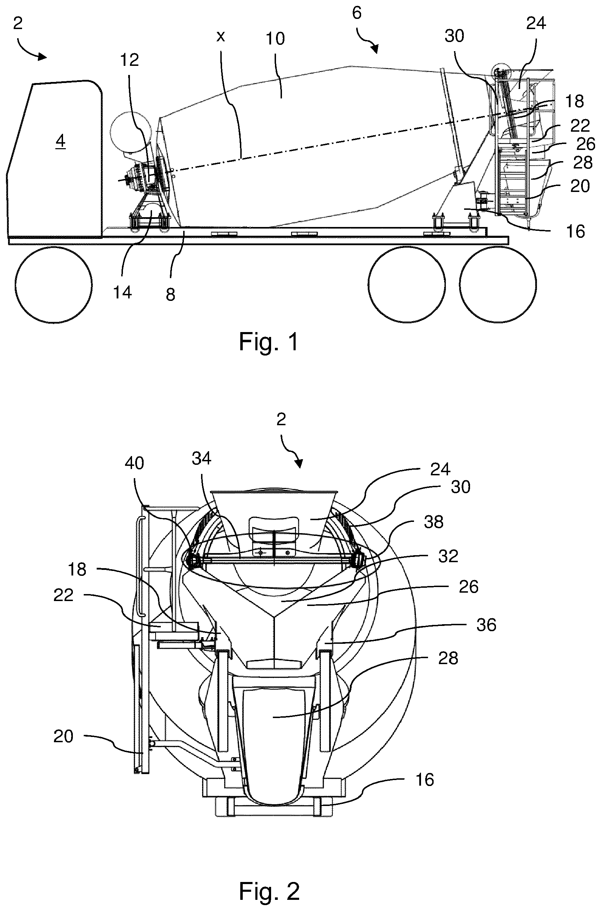

Fig. 1 zeigt einen Fahrmischer 2. Der Fahrmischer 2 kann beispielsweise ein Lastkraftwagen 4 mit einem entsprechenden Mischeraufbau 6 sein.

Der Mischeraufbau 6 weist einen Rahmen 8 auf, auf dem eine Mischertrommel 10 drehbar angeordnet ist. Zum Drehen der Mischertrommel 10 um eine Drehachse x ist ein Antrieb 12 vorgesehen. Der Antrieb 12 ist auf einem Lagerbock 14 festgelegt, der seinerseits auf den Rahmen 8 befestigt ist. Die Drehachse x der Mischertrommel 10 weist schräg nach hinten oben.

Im Inneren der Mischertrommel 10 sind Mischerspiralen angeordnet, um das zu mischende Gut zu durchmischen.

Am hinteren Ende des Fahrmischers 2 ist ein weiterer Lagerbock 16 angeordnet, an dem ein Haltearm 18 angeordnet ist. An dem Haltearm 18 ist eine Treppe 20 mit einer Plattform 22 befestigt.

Des Weiteren sind an dem Haltearm 18 und einem gegenüberliegenden, in Fig. 1 nicht sichtbaren weiteren Haltearm ein Einfülltrichter 24 sowie eine Auslaufschale 26 angeordnet. Der Einfülltrichter 24 überdeckt eine in Fig. 1 nicht sichtbare Trommelöffnung der Mischertrommel 10. Mittels des Einfülltrichters 24 können Materialien in die Mischertrommel 10 eingefüllt werden, zum Beispiel Beton in einem Betonwerk.

Unterhalb der Trommelöffnung ist eine Auslaufschale 26 vorgesehen, über die beim Ausschüttvorgang das in der Mischertrommel 10 transportierte Material ausgeschüttet werden kann. Die Auslaufschale 26 führt das Material zusammen und leitet es einer Schurre 28 zu.

An dem Haltearm 18 und dem anderen Haltearm ist des Weiteren ein Bügel 30 angeordnet, der die Mischertrommel 10 überspannt.

Fig. 2 zeigt eine Heckansicht des Fahrmischers 2.

Der Einfülltrichter 24 überdeckt eine Trommelöffnung 32 und ragt in die Trommelöffnung 32 hinein.

Der Einfülltrichter 24 ist an einer Querstange 34 festgelegt, die sich einerseits am Haltearm 18, andererseits an einem Haltearm 36 abstützt. Die Querstange 34 ist am Haltearm 36 mittels einer Lagervorrichtung 38 festgelegt, welches im Wesentlichen vertikal ausgerichtet ist, wie in den nachfolgenden Figuren dargestellt ist.

Am Haltearm 18 ist die Querstange 34 mittels einer Klemmverbindung 40 festgelegt.

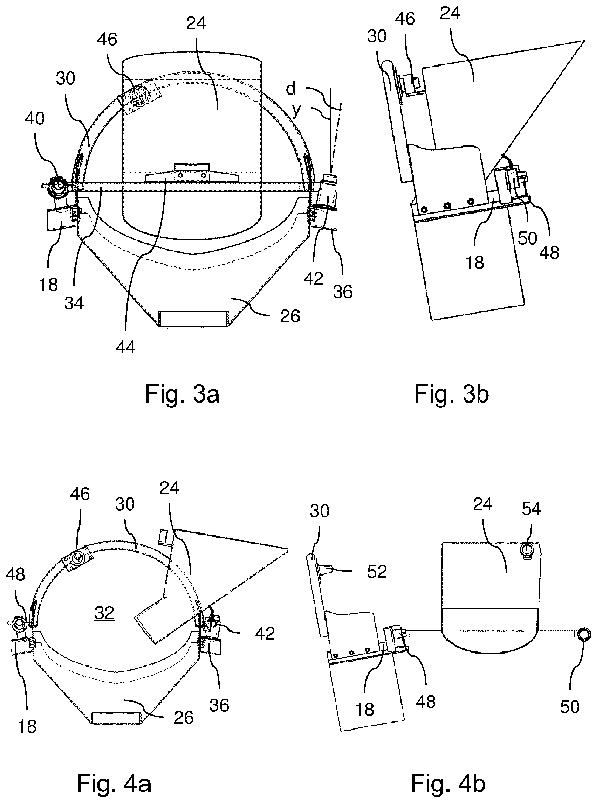

Die Fig. 3a bis Fig. 4b zeigen die Befestigung sowie Bewegung des Einfülltrichters 24 in verschiedenen Ansichten.

Fig. 3a zeigt eine Heckansicht auf den Einfülltrichter 24 in einer geschlossenen, ersten Position.

Die Lagervorrichtung 38 ist gegenüber einer Vertikalen y leicht geneigt. Eine Drehachse d der Lagervorrichtung 38 weist ca. 5° nach außen (hier nach rechts) sowie 8° nach vorne (in Fahrtrichtung betrachtet, hier in die Bildfläche hinein), um beim Verschwenken des Einfülltrichters 24 diesen leicht anzuheben und über eine Kante der Trommelöffnung 32 hinweg zu heben.

Die Lagervorrichtung 38 weist ein Wälzlager 42 auf. Das Wälzlager 42 ist gekapselt, um es gegen Umwelteinflüsse und Verschmutzung zu schützen.

Der Einfülltrichter 24 ist mittels eines an der Querstange 34 angeordneten Flansches 44 festgelegt.

In der dargestellten geschlossenen Position ist der Einfülltrichter 24 mittels einer Befestigung am Bügel 30 arretiert.

Fig. 3b zeigt eine Seitenansicht des Einfülltrichters 24. An dem Haltearm 18 ist ein Klemmkonus 48 vorgesehen, auf dem eine an der Querstange 34 angeordnete Klemmöse 50 klemmt.

In Fig. 4a ist der Einfülltrichter 24 in aufgeklappter Position dargestellt. Um in diese Position zu gelangen, wurde die Klemmverbindung 40 durch Hammerschlag gegen die Klemmöse 50 gelöst und der Einfülltrichter 24 mithilfe eines Hakens an der Querstange 34 weggeschwenkt.

Die in Fig. 4a dargestellte Position ist nicht die Endposition. Wie in Fig. 4b zu sehen ist, kann der Einfülltrichter 24 noch weiter verschwenkt werden, um die Trommelöffnung 32 vollständig freizugeben.

Die Befestigung 46 besteht ebenfalls aus einem Klemmkonus 52 sowie einer Klemmöse 54.

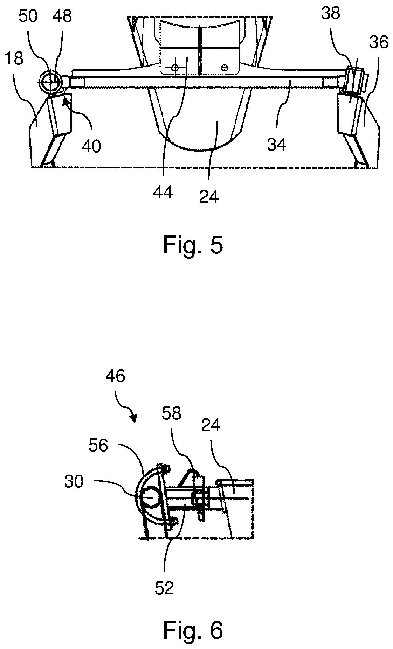

Fig. 5 zeigt eine Heckansicht des Fahrmischers 2 mit abgenommener Auslaufschale.

Die Auslaufschale 26 ist separat an den Haltearmen 18 und 36 festgelegt und kann separat abgenommen werden. Der Einfülltrichter 24 ist unabhängig von der Auslaufschale 26 an den Haltearmen 18, 36 festgelegt.

Fig. 6 zeigt eine Vergrößerung der Befestigung 46 des Einfülltrichters 24 an dem Bügel 30.

Der Klemmkonus 52 ist mittels einer Schelle 56 an dem Bügel 30 festgelegt.

Die Befestigung 46 wird mittels eines Sicherungssplints 58 gesichert.

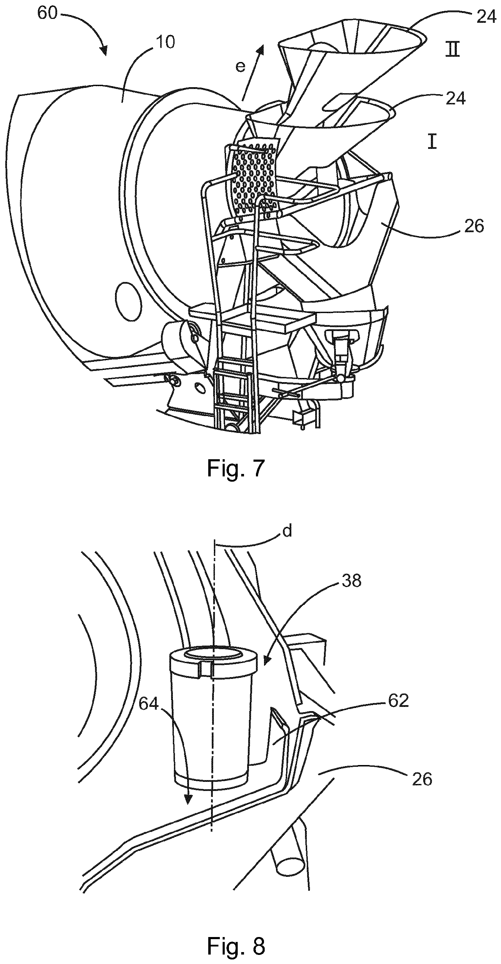

Fig. 7 zeigt einen Fahrmischer 60, bei dem der Einfülltrichter 24 in zwei unterschiedlichen Positionen gezeigt ist. Die untere Position entspricht der vorangehend als erste Position bezeichneten Position und wird hier mit I gekennzeichnet. In der ersten Position kann mittels des Einfülltrichters 24 Material in die Mischertrommel 10 geleitet werden. Wird der Einfülltrichter 24 im Wesentlichen vertikal nach oben verfahren, gerät er in eine vorangehend zweite Position genannte Position. Diese wird mit II gekennzeichnet. Die Bewegung wird dabei entlang einer Bewegungsachse e (auch als Bewegungsrichtung) mittels einer hier nicht detailliert dargestellten Lagervorrichtung ermöglicht.

Die Bewegungsachse e ist im Wesentlichen vertikal ausgerichtet. Sie kann jedoch, wie in Fig. 7 erkennbar, einen geringfügigen horizontalen Bewegungsanteil aufweisen. Der Einfülltrichter 24 kann nicht nur nach oben, sondern auch etwas nach hinten bewegt werden.

In der zweiten Position II kann eine Reinigungslanze in die Mischertonne 10 eingeführt werden, um diese zu reinigen. Zum Bewegen des Einfülltrichters 24 ist eine Antriebsvorrichtung (nicht gezeigt) vorgesehen. Diese könnte beispielsweise als ein Paar von seitlich an dem Einfülltrichter 24 oder der Querstange 34 eingreifenden Hydraulikzylindern realisiert sein.

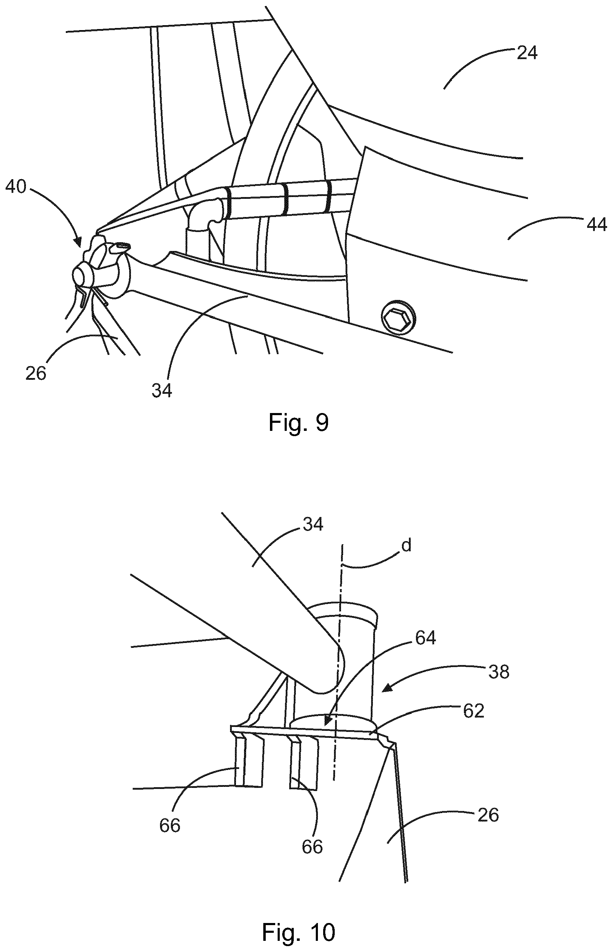

Die Fig. 8, 9 und 10 zeigen verschiedene Details eines Nachrüstkits. Fig. 8 zeigt etwa die Lagervorrichtung 38, die an einem Beschlag 62 angeordnet ist, der beispielhaft mit dem zweiten Haltearm 36 verbunden ist. Hier kann die Querstange 34 angeordnet werden, wie in Fig. 10 ausgeführt.

In dem Beispiel ist die Lagervorrichtung 38 separat von der Auslaufschale 26 befestigt. Die Lagervorrichtung 38 könnte alternativ auch mit der Auslaufschale 26 verbunden sein.

Der Beschlag 62 kann eine Auflagefläche 64 aufweisen, auf der die Lagervorrichtung 38 angeordnet ist. Ist diese als drehbares Lager ausgeführt, kann die Drehachse d im Wesentlichen senkrecht zu der Auflagefläche 64 angeordnet sein.

In einem Beispiel ist die Drehachse (in Fahrtrichtung bei eingebautem Zustand) leicht nach vorne gekippt angeordnet, zum Beispiel um maximal 10°, beispielsweise um ca. 5°.

Auf einer von der Auflagefläche 64 und der Lagervorrichtung 38 abgewandten Seite des Beschlags 62 sind beispielhaft Verstärkungsrippen 66 vorgesehen, welche die Festigkeit des Beschlags 62 zur Aufnahme eines Biegemoments bei gelöster Klemmverbindung 40 erhöht. Der Beschlag 62 ist in lateraler Richtung weiterhin bündig mit angrenzenden Flächen des Fahrmischers 2 verbunden und beispielhaft verschweißt.

Auf einer der Lagervorrichtung 38 gegenüberliegenden Seite ist die Klemmverbindung 40 als weiterer Teil des Nachrüstkits angeordnet, welche eine lösbare Verbindung zwischen der Querstange 34 und dem ersten Haltearm 16 bzw. der Auslaufschale 26 herstellen kann. Der Einfülltrichter 24 sowie ein mit der Querstange 34 und dem Einfülltrichter 24 verbindbarer Flansch 44 können ebenso Teil des nach Nachrüstkits sein. Damit ist es möglich, bekannte und bereits in Gebrauch befindliche Fahrmischer mit den erfindungsgemäßen Merkmalen auszustatten, um die vorangehend dargestellten Vorteile zu realisieren.

Der Beschlag 62 weist beispielsweise zwei seitlich an der Haltstruktur zu befestigende Konsolen auf. Die Konsolen können an seitlichen Wandungen befestigt werden, zum Beispiel durch Schraub- oder Nietverbindungen, oder durch Schweißverbindungen. Das drehbare Lager 38 wird auf der einen Konsole aufgesetzt und die Klemmverbindung 40 auf der anderen Seite.

In einer anderen Variante sind die Konsolen mit einem feststehenden Klammern ausgebildet, mit denen seitliche Tragbleche umgreifbar sind, so dass die Befestigung durch Einsteckbolzen erfolgen kann.

Die seitlichen Wandungen bzw. Tragbleche können zum Beispiel vorgesehene Haltearme sein, die mit der Haltestruktur der Mischertrommel verbunden sind. Die Haltearme können gleichzeitig auch der Befestigung der Auslaufschale dienen.

Die seitlichen Wandungen bzw. Tragbleche können aber auch obere Ränder der Auslaufschale sein.

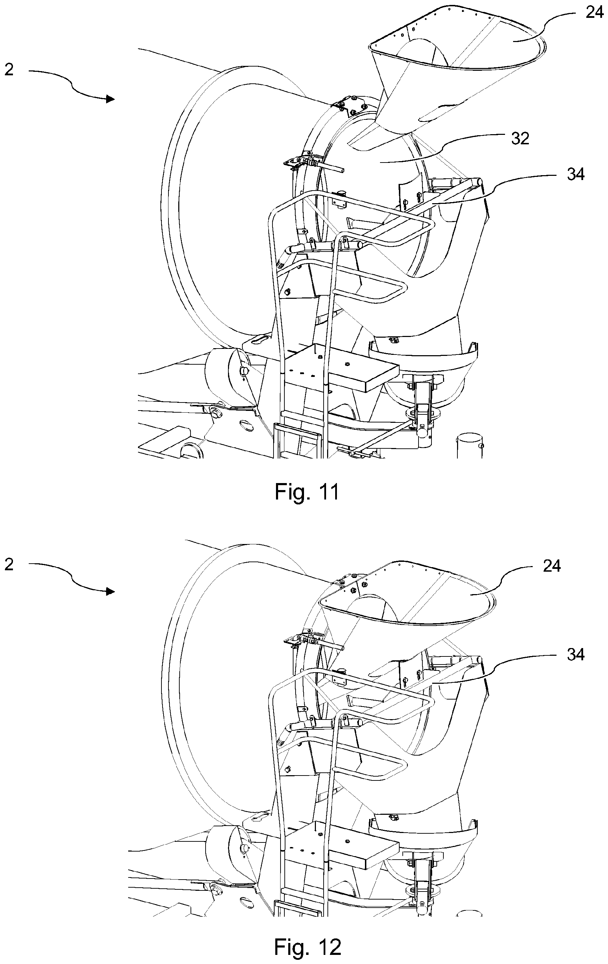

Fig. 11 zeigt eine perspektivische Draufsicht eines Beispiels des Fahrmischers 2. Der Einfülltrichter 24 ist hier in einer angehobenen Position gezeigt und in dieser Position nicht an dem Fahrmischer montiert, zum Beispiel noch nicht oder nicht mehr. Der Fahrmischer 2 ist mit einer Halterung für den Einfülltrichter 24 ausgestattet, zum Beispiel in Form eines Beispiels des beschriebenen Nachrüstkits. Unterhalb des Einfülltrichters 24 ist die Querstange 34 mit dem mittleren Abstützpunkt vorgesehen, auf dem sich der Einfülltrichter 24 in montiertem Zustand abstützen kann. Außerdem sind seitliche Halterungen vorgesehen, mit denen der Einfülltrichter 24 beweglich gehalten ist, um die Trommelöffnung 32 für Reinigungszwecke freizugeben. Der Nachrüstkit umfasst beispielsweise einen Bewegungsmechanismus für den Einfülltrichter 24.

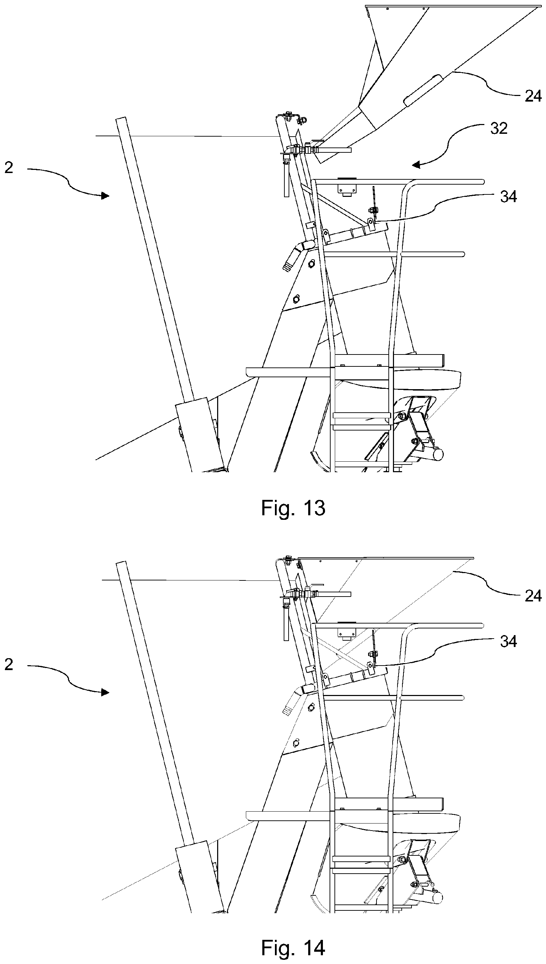

Fig. 12 zeigt den Fahrmischer 2 aus Fig. 11, bei dem der Einfülltrichter 24 montiert ist, d.h. zum Beispiel mit dem Nachrüstkit beweglich gehalten ist. Fig. 13 zeigt eine Seitenansicht des Fahrmischers 2 aus Fig. 11 mit dem Einfülltrichter 24 in einer angehobenen Position. Fig. 14 zeigt eine Seitenansicht des Fahrmischers 2 aus Fig. 12 mit dem Einfülltrichter 24 im montierten Zustand, in dem der Einfülltrichter 24 jedoch beweglich gehalten ist.

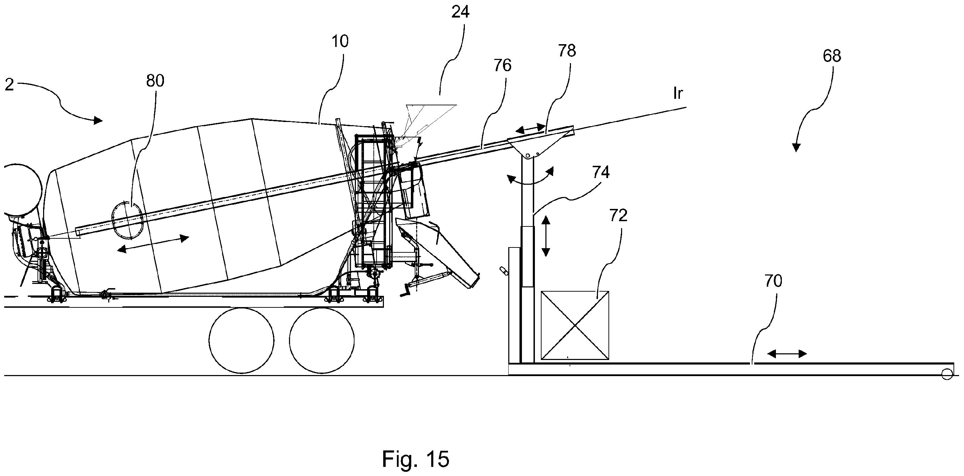

Fig. 15 zeigt in einer Seitenansicht ein Beispiel des Fahrmischers 2. Der Einfülltrichter 24 ist mit Hilfe des Bewegungsmechanismus aus dem Bereich der Trommelöffnung 32 der Mischertrommel 10 bewegt. In dem gezeigten Beispiel ist der Einfülltrichter 24 beispielsweise nach oben verschoben. In einem anderen Beispiel (nicht gezeigt) ist vorgesehen, dass der Einfülltrichter 24 zur Seite verschwenkt wird, um die Trommelöffnung 32 wenigstens teilweise freizugeben. In einem weiteren Beispiel (ebenfalls nicht gezeigt) ist vorgesehen, dass der Einfülltrichter 24 nach oben verschwenkt wird, um die Trommelöffnung 32 wenigstens teilweise freizugeben.

In Fig. 15 ist ein Beispiel einer Reinigungsvorrichtung 68 gezeigt. Die Reinigungsvorrichtung 68 weist beispielsweise eine Basis 70 auf. Die Basis 70 ist zum Beispiel wenigstens teilweise mobil und weist z.B. an einem Ende Rollenlager auf, um auf einer Fläche eines Betriebshofs bewegt zu werden. Auf der Basis 70 ist ein Behälter 72 angedeutet. Dieser kann zum Beispiel als Container ausgebildet sein und Material und Equipment aufnehmen. Zum Beispiel kann eine Pumpeneinrichtung vorgesehen sein. Ein Tank für Reinigungsflüssigkeiten, zum Beispiel Wasser, kann ebenfalls auf der Basis 70 ausgebildet sin, zum Beispiel in dem Behälter 72. Die Basis 70 weist eine höhenverstellbare Halterung 74 auf, um eine Reinigungslanze 76 zu halten. Die Höhenverstellbarkeit dient zum Beispiel dazu, die Höhe der Reinigungslanze 76 im Verhältnis zum Fahrmischer 2 einstellen zu können. Am oberen Ende der höhenverstellbaren Halterung 74 ist beispielsweise eine Halterung 78 für die Reinigungslanze 76 vorgesehen. Diese kann zum Beispiel einstellbar sein, um einen Winkel der Reinigungslanze 76 zu dem Fahrmischer 2 einstellen zu können. Die Halterung 78 kann außerdem einen Antrieb aufweisen, um die Reinigungslanze 76 entlang ihrer Längsachse *lr* bewegen, zum Beispiel verschieben zu können. Im Bereich eines vorderen Endes der Reinigungslanze 76 ist ein Sprühkopf 80 angedeutet, der in Fig. 15 in die Mischertrommel 10 eingeführt ist. Dadurch lässt sich die Reinigungslanze 76 über die freigegebene Trommelöffnung 32 in die Mischertrommel 10 einführen, und der Sprühkopf 80 kann entsprechend positioniert werden. Der Sprühkopf 80 kann Düsen oder andere geeignete Öffnungen aufweisen, aus denen ein Fluid austritt und mit hohem Druck auf Beton- oder ähnliche Reste trifft, die sich an der Innenwand der Mischertrommel 10 gebildet haben. Der Sprühkopf 80 kann beispielsweise um die Längsachse *lr* drehbar sein, um einen oder mehrere rotierenden Sprühstrahle bzw. Sprühstrahlbündel auszubilden.

Zusammen mit der Reinigungsvorrichtung 68 ergibt die bewegliche Halterung des Einfülltrichters 24 eine verbesserte Möglichkeit zur Reinigung von Mischertrommeln von Fahrmischern. Der Zugang zur Mischertrommel ist dabei in Ausrichtung der Längsachse der Mischertrommel möglich, so dass die Reinigungslanze in ihrer Längsrichtung eingeführt und in der Mischertrommel an unterschiedlichen Stellen positioniert werden kann.

Ergänzend sei darauf hingewiesen, dass "aufweisend" keine anderen Elemente oder Schritte ausschließt, und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### BEZUGSZEICHEN

- 2: Fahrmischer
- 4: Lastkraftwagen
- 6: Mischeraufbau
- 8: Rahmen
- 10: Mischertrommel
- 12: Antrieb
- 14: Lagerbock
- 16: Lagerbock
- 18: erster Haltearm
- 20: Treppe
- 22: Plattform
- 24: Einfülltrichter
- 26: Auslaufschale
- 28: Schurre
- 30: Bügel
- 32: Trommelöffnung
- 34: Querstange
- 36: zweiter Haltearm
- 38: Lagervorrichtung
- 40: Klemmverbindung
- 42: Wälzlager
- 44: Flansch
- 46: Befestigung
- 48: Klemmkonus
- 50: Klemmöse
- 52: Klemmkonus
- 54: Klemmöse
- 56: Schelle
- 58: Splint
- 60: Fahrmischer
- 62: Beschlag
- 64: Auflagefläche
- 66: Verstärkungsrippe
- 68: Reinigungsvorrichtung
- 70: Basis
- 72: Behälter
- 74: höhenverstellbare Halterung
- 76: Reinigungslanze
- 78: Halterung für Reinigungslanze
- 80: Sprühkopf

- x: Drehachse Mischertrommel
- y: Vertikale
- d: Drehachse Lagervorrichtung
- e: Bewegungsachse
- lr: Längsachse der Reinigungslanze

## Patentansprüche

1. Fahrmischer (2, 60), mit einer Mischertrommel (10), die auf einem Rahmen (8) eines Mischerfahrzeugs (2) um eine Drehachse (x) drehbar angeordnet ist, wobei die Mischertrommel (10) eine Trommelöffnung (32) aufweist, über die die Mischertrommel (10) befüllbar und entleerbar ist, wobei an dem die Mischertrommel (10) tragenden Rahmen (8) wenigstens ein Lagerbock (16) mit wenigstens zwei Haltearmen (18, 36) angeordnet sind, wobei die wenigstens zwei Haltearme (18, 36) beiderseits der Trommelöffnung (32) angeordnet sind, wobei an den Haltearmen (18, 36) ein Einfülltrichter (24) angeordnet ist, wobei der Einfülltrichter (24) in einer ersten Position so ausgerichtet ist, dass mittels des Einfülltrichters (24) Material über die Trommelöffnung (32) in die Mischertrommel (10) füllbar ist, wobei der Einfülltrichter (24) zumindest an einem ersten Haltearm (36) mittels einer Lagervorrichtung (38) bewegbar gelagert angeordnet ist, wobei eine Drehachse (d) oder eine Bewegungsachse (e) der Lagervorrichtung (38) überwiegend vertikal ausgerichtet ist, sodass der Einfülltrichter (24) seitlich oder nach oben von der Trommelöffnung (32) wegbewegbar ist, wobei der Einfülltrichter (24) zumindest an einem zweiten Haltearm (18) über eine lösbare Befestigung (40) festgelegt ist.

2. Fahrmischer (2, 60) nach Anspruch 1, wobei der Einfülltrichter (24) an dem ersten Haltearm (36) mittels der Lagervorrichtung (38) drehbar gelagert ist, sodass der Einfülltrichter (24) seitlich von der Trommelöffnung (32) wegschwenkbar ist, wobei der Einfülltrichter (24) an dem zweiten Haltearm (18) über die lösbare Befestigung (40) festgelegt ist.

3. Fahrmischer (2, 60) nach Anspruch 1, wobei der Einfülltrichter (24) an dem ersten Haltearm (36) und dem zweiten Haltearm (18) jeweils nach oben bewegbar gelagert ist, sodass der Einfülltrichter (24) nach oben von der Trommelöffnung (32) wegbewegbar ist, wobei der Einfülltrichter (24) an dem ersten Haltearm (36) und dem zweiten Haltearm (18) über die lösbare Befestigung (40) festgelegt ist.

4. Fahrmischer (2, 60) nach Anspruch 3, wobei die Lagervorrichtung (38) mindestens eine Linearführung zum Führen des Einfülltrichters (24) auf einer zumindest weitgehend geradlinigen Strecke aufweist.

5. Fahrmischer (2, 60) nach einem der vorhergehenden Ansprüche, wobei die lösbare Befestigung ein am Einfülltrichter (24) angeordnetes Klemmelement (50) und ein zumindest am zweiten Haltearm (18) angeordnetes Gegenklemmelement (48) aufweist; und wobei das Klemmelement eine Öse (50) und das Gegenklemmelement einen Klemmkonus (48) darstellt.

6. Fahrmischer (2, 60) nach einem der vorhergehenden Ansprüche, wobei die Haltearme (18, 36) mittels eines die Trommelöffnung (32) überspannenden Bügels (30) miteinander verbunden sind, wobei an dem Bügel (30) eine lösbare Befestigung (46) vorgesehen ist, an der der Einfülltrichter (24) in der ersten Position festlegbar ist.

7. Fahrmischer (2, 60) nach einem der vorangegangenen Ansprüche, wobei der Einfülltrichter (24) in eine zweite Position bewegbar ist, in der die Trommelöffnung (32) axial frei zugänglich ist.

8. Fahrmischer (2, 60) nach einem der vorangegangenen Ansprüche, wobei an den Haltearmen (18, 36) eine Auslaufschale (26) angeordnet ist.

9. Fahrmischer (2, 60) nach einem der vorhergehenden Ansprüche, wobei der Einfülltrichter (24) an einer Querstange (34) festgelegt ist, wobei die Querstange (34) drehbar am ersten Haltearm (36) festgelegt ist.

10. Fahrmischer (2, 60) nach einem der vorhergehenden Ansprüche, wobei die Drehachse (d) relativ zur Vertikalen (y) derart verkippt ist, dass der Einfülltrichter (24) beim Verschwenken von der ersten Position aus angehoben wird.

11. Fahrmischer (2, 60) nach einem der vorhergehenden Ansprüche, ferner aufweisend mindestens eine Antriebsvorrichtung, insbesondere einen Linearantrieb, zum Bewegen des Einfülltrichters (24).

12. Nachrüstkit zum Umbau eines Fahrmischers zu einem Fahrmischer (2) nach einem der vorhergehenden Ansprüche, mit einer Querstange (34) mit
- einer Befestigung (44) zur Montage eines Einfülltrichters (24),
- einer Lagervorrichtung (38) zur Festlegung der Querstange (34) zumindest an dem ersten Haltearm (36),
- einem lösbaren Befestigungsmittel (50) zur Festlegung zumindest an dem zweiten Haltearm (18), sowie
einem Gegenbefestigungsmittel (48) zur Montage an dem zweiten Haltearm (18).

13. Nachrüstkit nach Anspruch 12, ferner aufweisend den Einfülltrichter (24).

14. Nachrüstkit nach Anspruch 12 oder 13, ferner aufweisend mindestens einen Beschlag (62) zum Befestigen der Lagervorrichtung (38) zumindest an dem ersten Haltearm (36), wobei der Beschlag (62) zumindest mit dem ersten Haltearm (36) starr verbindbar ist.
